# EUROPÄISCHE PATENTANMELDUNG

(11) **EP 4 438 149 A1**
(43) Veröffentlichungstag der Anmeldung: **02.10.2024**
(21) Anmeldenummer: 24154357.8
(22) Anmeldetag: 29.01.2024
(51) Int. Cl.: B01D 1/26, B01D 1/28, B01D 3/00, B01D 3/06, C02F 1/04, C02F 1/06, C02F 103/08

(54) **VORRICHTUNG UND VERFAHREN ZUR AUFBEREITUNG VON PROZESSMEDIUM**

(30) Priorität: 31.03.2023 DE 102023102313
(71) Anmelder: MKR Metzger GmbH RECYCLINGSYSTEME, 86653 Monheim (DE)
(72) Erfinder: Xalter, Ralf, 86653 Monheim (DE); Friedrichowitz, Georg, 86653 Monheim (DE); Hager, Simon, 86653 Monheim (DE)
(74) Vertreter: Grünecker Patent- und Rechtsanwälte PartG mbB

(57) **Zusammenfassung**

Die vorliegende Erfindung betrifft eine Vorrichtung und ein Verfahren zur Aufbereitung von Prozessmedium durch Verdampfung. Eine erfindungsgemäße Vorrichtung umfasst einen Primärverdampfer, der eingerichtet ist, um das Prozessmedium in Destillat und Vorkonzentrat zu trennen und einen Sekundärverdampfer, der eingerichtet ist, um das Vorkonzentrat in Brüden und Konzentrat zu trennen, wobei der Primärverdampfer durch isobare Rückführung des im Sekundärverdampfer erzeugten Brüdens beheizt wird.

## Beschreibung

Die vorliegende Erfindung betrifft eine Vorrichtung und ein Verfahren zur Aufbereitung von wasserbasierten Prozessmedien durch Verdampfung, insbesondere Brüdenkompression.

Prozessmedien auf Wasserbasis stammen aus industriellen Anlagen und/oder der Herstellung von Produkten und sind beispielsweise mit Ölen, Salzen, Waschmittel oder dergleichen versetzt. Beispiele dafür sind Kühlschmieremulsionen, Druckgussemulsionen, Bodenreinigungswasser, Wasch- und Entfettungsbäder, Spülbäder oder Lackiervorbehandlungen sowie Abwässer aus Beizverfahren zur Oberflächenbehandlung von Metallen.

Herkömmliche Verfahren und Anlagen zur Aufbereitung wasserbasierter Prozessmedien, wie beispielsweise aus der DE 10 2012 203 439 A1 bekannt, setzen ein- oder mehrstufige Verdampfer ein, um das Prozessmedium in ein Destillat und ein Konzentrat zu trennen. Das Destillat kann in den Prozess zurückgeführt oder abgeleitet werden. Das Konzentrat kann bei herkömmlichen einstufigen Verdampfern beispielsweise ca. 65 bis 40 % Wasser und ca. 35 bis 60 % Reststoffe wie Öle und Salze enthalten.

Um wässrige Prozessmedien mit Verdampfern zu trennen, existieren im Allgemeinen zwei verschiedene Ansätze; einerseits die atmosphärische Verdampfung und andererseits die Verdampfung unter (Teil-)Vakuum. In herkömmlichen atmosphärischen Verdampfern wird die zur Eindampfung des Prozesswassers benötigte Energie zum einen mechanisch durch Kompression des Brüdens zugeführt, zum anderen thermisch mittels einer Heizung. Atmosphärische Verdampfer arbeiten dabei unter Atmosphärendruck bis hin zu einem Unter- bzw. Überdruck von ±100mbar. Im Falle von Vakuumverdampfern wird die benötigte Energie durch Verdichtung eingebracht, meist jedoch ohne Energie thermisch mittels einer Heizung zuzuführen. Dies benötigt im Vergleich zur atmosphärischen Verdampfung eine höhere Volumenänderung, erübrigt meist jedoch eine thermische Zuheizung.

Ein Merkmal herkömmlicher Verdampfer besteht in der erforderlichen Zuheizung, die einen hohen Energieeintrag bedingt. Bestrebungen, eine höhere Konzentration des Konzentrats durch eine höhere Eindampfung des Prozessmediums mittels eines mehrstufigen Aufbaus von Verdampfern zu erreichen, verstärken diesen Nachteil signifikant.

Der vorliegenden Erfindung liegt daher die Aufgabe zugrunde, eine Vorrichtung und ein Verfahren zur Aufbereitung von wasserbasierten Prozessmedien durch Verdampfung, insbesondere Brüdenkompression, bereitzustellen, um die Konzentration des Konzentrats gegenüber den bekannten Lösungen auf wirtschaftliche Weise zu erhöhen.

Diese Aufgabe wird erfindungsgemäß durch die Merkmale der unabhängigen Ansprüche gelöst. Bevorzugte Ausgestaltungen der Erfindung sind Gegenstand der Unteransprüche.

Eine erfindungsgemäße Vorrichtung zur Aufbereitung von wasserbasierten Prozessmedien durch Verdampfung/Brüdenkompression umfasst einen Primärverdampfer, der eingerichtet ist, um das Prozessmedium in Destillat und Vorkonzentrat zu trennen und einen Sekundärverdampfer, der eingerichtet ist, um das Vorkonzentrat in Brüden und Konzentrat zu trennen, wobei der Primärverdampfer durch isobare Rückführung des im Sekundärverdampfer erzeugten Brüdens beheizt wird.

Eine isobare Rückführung des Brüdens bedeutet im Sinne der vorliegenden Erfindung, dass der Brüden unter nahezu gleichen Druckbedingungen, d.h. ohne aktive Druckänderung geführt wird. Mit anderen Worten wird unter der isobaren Rückführung eine Ableitung des Brüdens vom Sekundärverdampfer ohne zwischengeschaltete Verdichteranordnung oder -Stufe verstanden. Je nach Energieverlust während der Führung des Brüdens, beispielsweise in einer Brüdenleitung, ist zwangsläufig von einem Druckgefälle von einigen mbar bei der Rückführung des Brüdens auszugehen. In jedem Fall wird der Druck des Brüdens zumindest nicht aktiv mittels einer Verdichteranordnung oder dergleichen geändert.

Maßgeblich im Sinne der vorliegenden Erfindung ist es, die Energie des im Sekundärverdampfer erzeugten Brüdens zur Beheizung des Primärverdampfers rückzuführen, wobei die Rückgewinnung der im Brüden gespeicherten Energie unter isobarer Führung (d.h. ohne aktive Druckänderung) des Brüdens erfolgt.

Dadurch wird eine mehrstufige Verdampferanordnung bereitgestellt, welche gegenüber einstufigen Verdampfern ohne nennenswerten energetischen Mehraufwand betrieben werden kann. Gleichzeitig wird eine weitergehende Aufkonzentrierung erreicht. Durch die Bereitstellung des Sekundärverdampfers wird einerseits zusätzliche Energie benötigt. Aufgrund des aus dem Sekundärverdampfer rückgeführten Brüdens kann jedoch die zusätzlich aufgewendete Energie, welche im Brüden gespeichert ist, in den Prozess zurückgeführt werden. D.h., wenn der Brüden wieder kondensiert, wird Kondensationswärme frei, welche zuvor als Verdampfungswärme im Sekundärverdampfer eingebracht werden musste. Lediglich ein geringfügiger Teil geht als Wärme im Konzentrat und anlagenbedingte Abwärme verloren. Gegenüber herkömmlichen Lösungen wird damit die Heizung im Wesentlichen in den nachgeschalteten Sekundärverdampfer ausgelagert.

Somit kann eine höhere Aufkonzentrierung des Konzentrats auf wirtschaftliche Weise erreicht werden.

Eine bevorzugte Möglichkeit der isobaren Rückführung besteht in der direkten isobaren Führung des Brüdens in den Primärverdampfer. Dies wird beispielsweise mit einer direkten brüdenseitigen Kopplung des Primärverdampfers mit dem Sekundärverdampfer erreicht. Dabei kann ein natürliches Druckgefälle genutzt werden, ohne einen zusätzlichen Verdichter zwischenzuschalten, welcher zusätzliche Energie erfordern würde. So kann der Primärverdampfer mit der Energie des im Sekundärverdampfer erzeugten Brüdens beheizt werden, indem der Brüden beispielsweise in einem Wärmetauscher kondensiert, der im oder am Primärverdampfer bereitgestellt ist und die frei werdende Kondensationsenergie dem Aufbereitungsprozess des Prozessmediums zuführt.

Die Rückgewinnung der Energie aus dem Brüden muss jedoch nicht zwangsweise direkt im oder am Primärverdampfer stattfinden, sondern kann auf dem Weg der Rückführung des Brüdens erfolgen. D.h., im Zuge der isobaren Rückführung kann die isobare Führung des Brüdens in einen mit dem Primärverdampfer thermisch gekoppelten Wärmetauscher erfolgen, der sich auch außerhalb des Primärverdampfers befinden kann. Durch die thermische Kopplung kann schließlich der Primärverdampfer mit der Energie des im Sekundärverdampfer erzeugten Brüdens beheizt werden.

Die Energierückgewinnung kann demnach erfolgen, indem dem Brüden direkt im/am Primärverdampfer oder auf dem Weg der Rückführung Energie entzogen wird.

Das Brüdenkondensat wird nach erfolgter Energierückgewinnung vorzugsweise zusammen mit dem im Primärverdampfer abgetrennten Destillat abgeführt und/oder zur Redestillation in das aufzubereitende Prozessmedium eingeleitet.

Insbesondere bei der Behandlung von Kühlschmierstoff-Emulsionen kann mit steigender Aufkonzentrierung des Vorkonzentrats eine erhöhte Belastung des Brüdens entstehen. Würde dieser direkt in den Destillatkreislauf des Primärverdampfers eingeleitet werden, könnte das die Qualität des Destillats verschlechtern. Dies kann durch Einleitung des (wiederverflüssigten) Brüdens in das aufzubereitende Prozessmedium verhindert werden. Alternativ kann der (wiederverflüssigte) Brüden mit dem Destillat abgeführt werden, welches aus dem Primärverdampfer abgeführt wird. Dies wäre im Sinne einer vorteilhaften Stoffbilanz zu bevorzugen. Grundsätzlich kann die Ab- bzw. Einleitung des (wiederverflüssigten) Brüdens in Abhängigkeit von Qualitätsanforderungen, ökonomischen Aspekten sowie der Art des aufzubereitenden Prozessmediums festgelegt werden.

Vorzugsweise wird der Primärverdampfer ausschließlich durch die Energie des im Sekundärverdampfer erzeugten Brüdens beheizt. Dadurch wird die Zuheizung des Primärverdampfers durch vollständige Auslagerung der Heizung in den Sekundärverdampfer vermieden.

Weiter vorzugsweise weist das Konzentrat einen Restwassergehalt von maximal 50%, bevorzugt maximal 20%, noch bevorzugter zwischen 10 und 15% auf. Grundsätzlich variiert die erreichbare Aufkonzentrierung unter anderem in Abhängigkeit von der Art des Prozessmediums oder von ökonomischen Gesichtspunkten. Eine Aufkonzentrierung auf den vorgenannten Restwassergehalt führt beispielsweise im Falle von Kühlschmierstoffen zu einem deutlich erhöhten Ölgehalt im Konzentrat. Ein dergestalt hochkonzentriertes Konzentrat kann anschließend in der Zementherstellung oder der Abfallverbrennung thermisch verwertet werden. Bedingt durch die niedrigen Restwassergehalte kann auch eine wirtschaftlich sinnvolle stoffliche Verwertung von beispielsweise Ölen und Salzen im Konzentrat erfolgen. Dadurch kann das Konzentrat auf ökonomische Weise einer weiteren Verwendung zugeführt werden und muss nicht teuer über Entsorgungsunternehmen entsorgt oder in weiteren Verfahrensschritten aufbereitet werden.

Vorzugsweise handelt es sich im Falle des Primär- und/oder Sekundärverdampfers um einen atmosphärischen Verdampfer. Dieser ist vorzugsweise eingerichtet, um bei annähernd atmosphärischem Druck bis zu einem Unter- bzw. Überdruck im Bereich von -100mbar bis 100mbar, bevorzugt bis zu einem Überdruck von etwa 50mbar, noch bevorzugter 30mbar zu arbeiten. Wie bereits beschrieben, arbeiten herkömmliche Vakuumverdampfer im Vakuum und wenden einen Großteil der eingebrachten Energie zum Verdichten auf. D.h., im Vergleich zu atmosphärischen Verdampfern wird wesentlich weniger Energie in Form von Heizleistung benötigt. Atmosphärische Verdampfer benötigen mehr Heizleistung und weniger Verdichtungsleistung. Daher kann mit atmosphärischen Verdampfern überschüssige Energie in Form von Wärme, insbesondere im Primärverdampfer, effizienter verwertet werden.

Die erfindungsgemäße Vorrichtung umfasst bevorzugt ein Drossel-/Düsensystem nach einem umströmten Heizelement, vorzugsweise ausgeführt als Ringspalt, um das Vorkonzentrat als überhitztes Medium im Sekundärverdampfer, insbesondere durch Entspannungsverdampfung, in Brüden und Konzentrat zu trennen. Das aufzukonzentrierende Vorkonzentrat kann beispielsweise mit einer Umwälzpumpe über ein Heizelement gefördert werden. Durch das nach dem Heizelement angeordnete Drossel-/Düsensystem wird vermieden, dass eine Verdampfung des Vorkonzentrats bereits am Heizelement stattfindet. Insbesondere kann das auf eine Temperatur oberhalb seines Verdampfungspunkts erhitzte bzw. überhitzte Vorkonzentrat über eine Drosselklappe in einen Behälter eingedüst werden, wodurch Wasser verdampft. Das Restkonzentrat geht zurück in den Kreislauf, bis die gewünschte Konzentration erreicht ist. Vor der Drossel/Düse wird folglich ein hoher Druck oberhalb des Verdampfungspunkts aufgebaut, hinter der Drossel/Düse entspannt sich das Vorkonzentrat schlagartig und wird sofort verdampft. Diese Art der Verdampfung wird als "Flash-Verdampfung" oder "Entspannungsverdampfung" bezeichnet.

Die weiter bevorzugte Bereitstellung eines Ringspalts verhindert das Risiko, dass sich Ablagerungen und Verkrustungen durch das aufkonzentrierte Prozessmedium bilden. Mit anderen Worten steigt mit zunehmender Aufkonzentration des Prozessmediums, bzw. mit sinkendem Restwassergehalt, die Gefahr, dass sich Verkrustungen und Ablagerungen bilden. Diesbezüglich bietet die Bereitstellung eines Ringspalts aufgrund hoher Strömungsgeschwindigkeiten bzw. Scherkräften abreinigende Wirkung um die Heizung.

Noch bevorzugter umfasst die erfindungsgemäße Vorrichtung ferner einen Puffer, der zwischen den Primärverdampfer und den Sekundärverdampfer zwischengeschaltet ist und eingerichtet ist, zumindest einen Teil des Vorkonzentrats zwischenzuspeichern. Zum einen kann solch ein Puffer Produktionsschwankungen des vorgeschalteten Primärverdampfers ausgleichen, wodurch ein konstanter und gleichbleibender Betrieb des Sekundärverdampfers ermöglicht wird. Dies ist insbesondere vorteilhaft, um eine erforderliche Brüdenmenge zur Beheizung des Primärverdampfers bereitstellen zu können. Zum anderen kann der Sekundärverdampfer bei einem Anfahrprozess der erfindungsgemäßen Vorrichtung zunächst (ausschließlich) mit Vorkonzentrat aus dem Puffer betrieben werden. Dadurch kann Wärme für das Vorheizen des Primärverdampfers erzeugt werden, ohne dass dieser von Anfang an unter Kaltstart-Bedingungen betrieben werden muss. Somit kann ebenfalls der Anfahrprozess der erfindungsgemäßen Vorrichtung energetisch optimiert werden.

Ein weiterer Aspekt der vorliegenden Erfindung betrifft ein Verfahren zur Aufbereitung von wasserbasierten Prozessmedien durch Verdampfung/Brüdenkompression, insbesondere mit einer Vorrichtung nach einem der vorangehenden Aspekte, wobei das Verfahren die folgenden Schritte umfasst:
- Trennung des Prozessmediums in einem Primärverdampfer in Destillat und Vorkonzentrat; und
- Trennung des Vorkonzentrats in einem Sekundärverdampfer in Brüden und Konzentrat, wobei der Primärverdampfer durch isobare Rückführung des im Sekundärverdampfer erzeugten Brüdens beheizt wird.

Vorzugsweise wird das Prozessmedium im Primärverdampfer und/oder das Vorkonzentrat im Sekundärverdampfer bei atmosphärischem Druck bis zu einem Unter- bzw. Überdruck im Bereich von -100mbar bis 100mbar, bevorzugt bis zu einem Überdruck von etwa 50mbar, noch bevorzugter 30mbar getrennt.

Weiter bevorzugt wird der Primärverdampfer ausschließlich durch die isobare Rückführung des im Sekundärverdampfer erzeugten Brüdens beheizt.

Es kann sich als vorteilhaft erweisen, wenn das Vorkonzentrat im Sekundärverdampfer als überhitztes Medium durch Entspannungsverdampfung, insbesondere nach Führung über einen Ringspalt, in Brüden und Konzentrat getrennt wird.

Weiter vorzugsweise wird zumindest ein Teil des Vorkonzentrats in einem Puffer zwischengespeichert, bevor es im Sekundärverdampfer in Brüden und Konzentrat getrennt wird. Vorzugsweise wird bei einem Anfahren der Aufbereitung des Prozessmediums zunächst ausschließlich im Puffer zwischengespeichertes Vorkonzentrat im Sekundärverdampfer in Brüden und Konzentrat getrennt.

### Kurze Beschreibung der Figuren

Es zeigen:
Fig. 1 ein schematisches Blockdiagramm einer erfindungsgemäßen Vorrichtung nach einer ersten Ausführungsform der vorliegenden Erfindung.
Fig. 2 ein schematisches Blockdiagramm einer erfindungsgemäßen Vorrichtung nach einer zweiten Ausführungsform der vorliegenden Erfindung.
Fig. 3 ein schematisches Blockdiagramm einer erfindungsgemäßen Vorrichtung nach einer dritten Ausführungsform der vorliegenden Erfindung.

### Detaillierte Beschreibung bevorzugter Ausführungsbeispiele

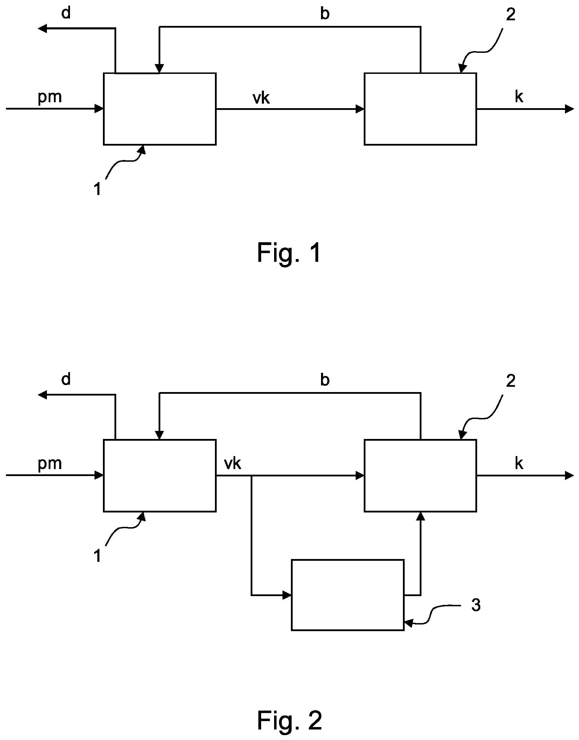

Ein erstes bevorzugtes Ausführungsbeispiel der Erfindung wird nachstehend mit Bezug auf die beiliegende Figur 1 im Detail beschrieben.

Fig. 1 zeigt in einem schematischen Blockdiagramm eine zweistufige Verdampferanordnung, mit welcher ein wasserbasiertes Prozessmedium pm, wie beispielsweise eine Kühlschmieremulsion, aufbereitet werden kann. Das Prozessmedium pm weist beispielsweise einen Wassergehalt von etwa 95 % auf.

Die Verdampferanordnung umfasst zwei Verdampfer, d.h. einen vorgeschalteten Primärverdampfer 1 sowie einen dem Primärverdampfer 1 nachgeschalteten Sekundärverdampfer 2. Im vorliegenden bevorzugten Ausführungsbeispiel handelt es sich bei beiden Verdampfern 1, 2 um atmosphärische Verdampfer, in denen das einzudampfende Medium im Wesentlichen unter Zuführung von Wärme unter Atmosphärendruck (bis zu einem leichten Überdruck von beispielsweise etwa 30mbar) eingedampft wird.

Über einen Zulauf wird das Prozessmedium pm zunächst in den Primärverdampfer 1 eingeleitet und zirkuliert in diesem vorzugsweise mittels eines mechanischen Antriebs, wie einer Umwälzpumpe. Unter Zufuhr von Heizenergie wird das im Kreislauf des Primärverdampfers 1 befindliche Prozessmedium pm in Destillat d und Vorkonzentrat vk getrennt. Dabei verdampft ein Teil des Prozessmediums pm und kann nach Wiederverflüssigung als Destillat d abgeführt werden. Dieses kann zur Wiederverwendung zurück in industrielle Anlagen geführt werden. Sobald das Vorkonzentrat vk einen üblichen Restwassergehalt, von beispielsweise 65 %, aufweist, wird es ausgetragen und in den Sekundärverdampfer 2 eingeleitet.

Im Sekundärverdampfer 2 wird das aufzukonzentrierende Vorkonzentrat vk in einem Heizkreislauf erhitzt und beispielsweise mit Hilfe einer Umwälzpumpe über ein Heizelement gefördert. Durch die bevorzugte Bereitstellung eines Ringspalts wird das Risiko gesenkt, dass sich Ablagerungen und Verkrustungen aufgrund der hohen Aufkonzentration des Prozessmediums bilden. Durch das Heizelement wird das Vorkonzentrat vk auf eine Temperatur oberhalb seines Verdampfungspunkts erhitzt bzw. als überhitztes Medium über eine Drosselklappe in einen Behälter eingedüst. Vor der Drossel/Düse wird folglich ein hoher Druck oberhalb des Verdampfungspunkts aufgebaut (beispielsweise 2 bar _{[SH1]}), hinter der Drossel/Düse entspannt sich das überhitzte Medium schlagartig und wird sofort verdampft. Diese Art der Verdampfung wird auch als "Flash-Verdampfung" oder "Entspannungsverdampfung" bezeichnet. Bei diesem Vorgang wird das aufzukonzentrierende Vorkonzentrat vk eingedampft. Genauer gesagt verdampft ein Teil, welcher als Brüden b ausgeleitet wird und das Restkonzentrat wird anschließend zurück in den Kreislauf des Sekundärverdampfers 2 geleitet, bis eine gewünschte (End-)Konzentration erreicht ist. Dieses Restkonzentrat enthält beispielsweise einen Restwassergehalt von maximal 50%, bevorzugt maximal 20%, noch bevorzugter zwischen 10 und 15%, d.h., beispielsweise einen Ölgehalt von 70 - 90%. Ist die gewünschte Endkonzentration erreicht, wird das Konzentrat k aus dem Kreislauf des Sekundärverdampfers 2 ausgetragen.

Der im Sekundärverdampfer 2 erzeugte Brüden b wird dem Primärverdampfer 1 zugeführt. Dies erfolgt erfindungsgemäß unter im Wesentlichen isobaren Bedingungen. Das bedeutet, der im Sekundärverdampfer 2 erzeugte Brüden b wird über eine Leitung ohne aktive Nachverdichtung, d.h. ohne Zuhilfenahme einer Verdichterstufe oder ähnlichem, in einen Wärmetauscher geleitet, der sich im Primärverdampfer 1 befindet. Dort kondensiert der Brüden b, wodurch das Prozessmedium pm im Primärverdampfer 1 durch die frei werdende Kondensationswärme des Brüdens b aufgeheizt werden kann.

Die im Sekundärverdampfer 2 zur Eindampfung des Vorkonzentrats vk eingebrachte Energie wird fast vollständig im Brüden b gespeichert. Lediglich geringe Teile gehen durch Restwärme des Konzentrats k sowie durch anlagenspezifische Abwärme verloren. Damit kann ein Großteil der Energie, die im Sekundärverdampfer 2 zur Eindampfung des Vorkonzentrats vk eingebracht werden muss, durch die voranstehend beschriebene Kondensation des Brüdens b zurückgewonnen werden. Dies ermöglicht eine, vorzugsweise vollständige, Auslagerung der Erzeugung der im Primärverdampfer 1 benötigten Heizleistung in die nachgeschaltete Verdampferstufe, d.h. in den Sekundärverdampfer 2.

Nach erfolgter Abgabe der Kondensationswärme kann der (wiederverflüssigte) Brüden b als Destillat vorzugsweise in den aufzubereitenden Prozessmedienkreislauf des Primärverdampfers 1 eingeleitet werden. Insbesondere bei der Behandlung von Kühlschmierstoff-Emulsionen kann mit steigender Aufkonzentrierung des Vorkonzentrats vk eine erhöhte Belastung des Brüdens b entstehen. Würde dieser direkt in den Destillatkreislauf des Primärverdampfers 1 eingeleitet werden, könnte das die Qualität des Destillats d verschlechtern. Dies kann durch Einleitung des (wiederverflüssigten) Brüdens b in den Prozessmedienkreislauf des Primärverdampfers 1 verhindert werden.

Dieses Vorgehen ist jedoch nicht zwingend erforderlich. Alternativ kann der (wiederverflüssigte) Brüden b in das Destillat d eingeleitet werden, welches aus dem Primärverdampfer 1 abgeführt wird. Dies wäre im Sinne einer vorteilhaften Stoffbilanz zu bevorzugen.

Grundsätzlich kann die Ab- bzw. Einleitung des (wiederverflüssigten) Brüdens b in Abhängigkeit ökonomischer Aspekte sowie der Art des aufzubereitenden Prozessmediums pm festgelegt werden.

Im Folgenden wird eine Abwandlung des voranstehend beschriebenen Ausführungsbeispiels unter Bezugnahme auf die Fig. 2 beschrieben. Mit Ausnahme der nachstehend beschriebenen Unterschiede entsprechen die Vorrichtung sowie das Verfahren im Rahmen des abgewandelten Ausführungsbeispiels dem ersten Ausführungsbeispiel.

Um auf mögliche Betriebsschwankungen eingehen zu können und die Energieeffizienz weiter zu verbessern, kann ein zusätzlicher Puffer 3 bereitgestellt werden.

Dieser ist dem Primärverdampfer 1 nachgeschaltet und dem Sekundärverdampfer 2 vorgeschaltet integriert. Zumindest ein Teil des aus dem Primärverdampfer 1 ausgetragenen Vorkonzentrats vk wird im Puffer 3 zwischengespeichert. Das im Puffer 3 zwischengespeicherte Vorkonzentrat vk kann bei Bedarf in den Sekundärverdampfer 2 eingeleitet werden.

Vorzugsweise kann Vorkonzentrat vk weiterhin direkt vom Primärverdampfer 1 zum Sekundärverdampfer 2 geleitet werden, ohne über den Puffer 3 zwischengespeichert zu werden. Es ist jedoch ebenfalls denkbar, dem Sekundärverdampfer 2 das aus dem Primärverdampfer 1 ausgetragene Vorkonzentrat vk ausschließlich über den Puffer 3 bereitzustellen.

Mithilfe des Puffers 3 können Produktionsschwankungen (Ausbringungsschwankungen) des vorgeschalteten Primärverdampfers 1 ausgeglichen werden, um dem Sekundärverdampfer 2 eine konstante Zufuhr von Vorkonzentrat vk sicherzustellen. Damit wird ein konstanter und gleichbleibender Betrieb des Sekundärverdampfers 2 ermöglicht.

Ferner kann beim Anschalten der erfindungsgemäßen Vorrichtung zunächst der Sekundärverdampfer 2 durch Einleitung des Vorkonzentrats vk aus dem Puffer 3 betrieben werden. Dadurch wird, wie voranstehend beschrieben, Brüden b im Sekundärverdampfer 2 erzeugt, welcher die für den Primärverdampfer 1 benötigte Heizenergie zur Verfügung stellen kann. Anschließend kann der Betrieb des Primärverdampfers 1 gestartet werden. Somit ist es möglich, energieeffizient Wärme für das Vorheizen und Starten des Primärverdampfers 1 bereitzustellen. Dadurch kann nicht nur der laufende Betrieb, sondern ebenfalls der Anfahrprozess der erfindungsgemäßen Vorrichtung energetisch optimiert werden, indem ebenfalls die Erzeugung der zum Vorheizen und Starten des Primärverdampfers 1 benötigte Heizenergie (zumindest teilweise, vorzugsweise aber vollständig) in den Sekundärverdampfer 2 ausgelagert wird.

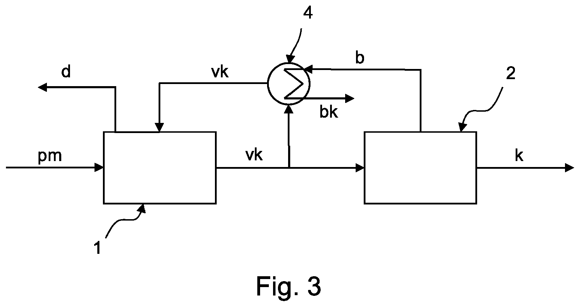

Eine weitere Abwandlung der voranstehend beschriebenen Ausführungsbeispiele wird nachfolgend unter Bezugnahme auf die Fig. 3 beschrieben. Mit Ausnahme der nachstehend beschriebenen Unterschiede entsprechen die Vorrichtung sowie das Verfahren im Rahmen des dritten Ausführungsbeispiels dem ersten Ausführungsbeispiel.

Wie bereits beschrieben, ist es nicht zwingend notwendig, die Rückgewinnung der im Brüden b gespeicherten Energie durch direkte Rückführung des Brüdens b in den Primärverdampfer 1 zu erreichen. Wie in Fig. 3 dargestellt ist, kann der Brüden b unter isobaren Bedingungen, d.h. ohne zwischengeschaltete Verdichteranordnung, in einen Wärmetauscher 4 geführt werden, in welchem er kondensiert. Das dabei entstehende Brüdenkondensat bk kann abhängig von Qualitätsanforderungen oder ökonomischen Aspekten entweder in das aufzubereitende Prozessmedium pm zur Redestillation eingeleitet werden oder dem Destillat d zugeführt werden.

Die im Brüden b gespeicherte Energie, die im Wärmetauscher 4 durch Kondensation des Brüdens b frei wird, wird mittels thermischer Kopplung des Wärmetauschers 4 mit dem Primärverdampfer 1 in den Primärverdampfer 1 zurückgeführt, um diesen zu beheizen. Wie in Fig. 3 dargestellt ist, kann dies erreicht werden, indem Vorkonzentrat vk aus dem Primärverdampfer 1 durch den Wärmetauscher 4 geleitet wird und wieder zurück in den Primärverdampfer 1 geleitet wird.

Die dritte Ausführungsform kann ebenfalls einen Puffer 3 aufweisen, wie voranstehend in Bezug auf Fig. 2 und das zweite Ausführungsbeispiel beschrieben.

### Bezugszeichenliste

- 1: Primärverdampfer
- 2: Sekundärverdampfer
- 3: Puffer
- 4: Wärmetauscher
- b: Brüden
- bk: Brüdenkondensat
- d: Destillat
- k: Konzentrat
- pm: Prozessmedium
- vk: Vorkonzentrat

## Patentansprüche

1. Vorrichtung zur Aufbereitung von wasserbasierten Prozessmedien (pm) durch Verdampfung/Brüdenkompression, umfassend
einen Primärverdampfer (1), der eingerichtet ist, um das Prozessmedium (pm) in Destillat (d) und Vorkonzentrat (vk) zu trennen; und
einen Sekundärverdampfer (2), der eingerichtet ist, um das Vorkonzentrat (vk) in Brüden (b) und Konzentrat (k) zu trennen,
**dadurch gekennzeichnet, dass**
der Primärverdampfer (1) durch isobare Rückführung des im Sekundärverdampfer (2) erzeugten Brüdens (b) beheizt wird.

2. Vorrichtung nach Anspruch 1, **dadurch gekennzeichnet, dass** die isobare Rückführung durch isobare Führung des Brüdens (b) in den Primärverdampfer (1) oder einen mit dem Primärverdampfer (1) thermisch gekoppelten Wärmetauscher (4) erfolgt, sodass der Primärverdampfer (1) mit der Energie des im Sekundärverdampfer (2) erzeugten Brüdens (b) beheizt wird.

3. Vorrichtung nach einem der vorangehenden Ansprüche, **dadurch gekennzeichnet, dass** der Primärverdampfer (1) ausschließlich durch die Energie des im Sekundärverdampfer (2) erzeugten Brüdens (b) beheizt wird.

4. Vorrichtung nach einem der vorangehenden Ansprüche, **dadurch gekennzeichnet, dass** das Konzentrat (k) einen Restwassergehalt von maximal 50%, bevorzugt maximal 20%, noch bevorzugter zwischen 10 und 15% aufweist.

5. Vorrichtung nach einem der vorangehenden Ansprüche, **dadurch gekennzeichnet, dass** der Primärverdampfer (1) und/oder der Sekundärverdampfer (2) einen atmosphärischen Verdampfer umfasst, der vorzugsweise eingerichtet ist, um bei atmosphärischem Druck bis zu einem Unter- bzw. Überdruck im Bereich von -100mbar bis 100mbar, bevorzugt bis zu einem Überdruck von etwa 50mbar, noch bevorzugter 30mbar zu arbeiten.

6. Vorrichtung nach einem der vorangehenden Ansprüche, umfassend ein Drossel-/Düsensystem nach einem umströmten Heizelement, vorzugsweise ausgeführt als Ringspalt, um das Vorkonzentrat (vk) als überhitztes Medium im Sekundärverdampfer (2), insbesondere durch Entspannungsverdampfung, in Brüden (b) und Konzentrat (k) zu trennen.

7. Vorrichtung nach einem der vorangehenden Ansprüche, ferner umfassend einen Puffer (3), der zwischen den Primärverdampfer (1) und den Sekundärverdampfer (2) zwischengeschaltet ist und eingerichtet ist, zumindest einen Teil des Vorkonzentrats (vk) zwischenzuspeichern.

8. Verfahren zur Aufbereitung von wasserbasierten Prozessmedien (pm) durch Verdampfung/Brüdenkompression, insbesondere mit einer Vorrichtung nach einem der vorangehenden Ansprüche, umfassend die Schritte:
Trennung des Prozessmediums (pm) in einem Primärverdampfer (1) in Destillat (d) und Vorkonzentrat (vk); und
Trennung des Vorkonzentrats (vk) in einem Sekundärverdampfer (2) in Brüden (b) und Konzentrat (k),
**dadurch gekennzeichnet, dass**
der Primärverdampfer (1) durch isobare Rückführung des im Sekundärverdampfer (2) erzeugten Brüdens (b) beheizt wird.

9. Verfahren nach Anspruch 8, **dadurch gekennzeichnet, dass** die isobare Rückführung durch isobare Führung des Brüdens (b) in den Primärverdampfer (1) oder einen mit dem Primärverdampfer (1) thermisch gekoppelten Wärmetauscher (4) erfolgt, sodass der Primärverdampfer (1) mit der Energie des im Sekundärverdampfer (2) erzeugten Brüdens (b) beheizt wird.

10. Verfahren nach Anspruch 8 oder 9, **dadurch gekennzeichnet, dass** das Prozessmedium (pm) im Primärverdampfer (1) und/oder das Vorkonzentrat (vk) im Sekundärverdampfer (2) bei atmosphärischem Druck bis zu einem Unter- bzw. Überdruck im Bereich von - 100mbar bis 100mbar, bevorzugt bis zu einem Überdruck von etwa 50mbar, noch bevorzugter 30mbar getrennt werden.

11. Verfahren nach einem der Ansprüche 8 bis 10, **dadurch gekennzeichnet, dass** der Primärverdampfer (1) ausschließlich durch die Energie des im Sekundärverdampfer (2) erzeugten Brüdens (b) beheizt wird.

12. Verfahren nach einem der Ansprüche 8 bis 11, **dadurch gekennzeichnet, dass** das Vorkonzentrat (vk) im Sekundärverdampfer (2) als überhitztes Medium durch Entspannungsverdampfung, insbesondere nach Führung über einen Ringspalt, in Brüden (b) und Konzentrat (k) getrennt wird.

13. Verfahren nach einem der Ansprüche 8 bis 12, **dadurch gekennzeichnet, dass** zumindest ein Teil des Vorkonzentrats (vk) in einem Puffer (3) zwischengespeichert wird, bevor es im Sekundärverdampfer (2) in Brüden (b) und Konzentrat (k) getrennt wird.

14. Verfahren nach Anspruch 13, **dadurch gekennzeichnet, dass** bei einem Anfahren der Aufbereitung des Prozessmediums (pm) zunächst ausschließlich im Puffer (3) zwischengespeichertes Vorkonzentrat (vk) im Sekundärverdampfer (2) in Brüden (b) und Konzentrat (k) getrennt wird.
